# EUROPÄISCHE PATENTSCHRIFT

(11) **EP 1 955 796 B1**
(45) Veröffentlichungstag und Bekanntmachung des Hinweises auf die Patenterteilung: **13.05.2009**
(21) Anmeldenummer: 07150107.6
(22) Anmeldetag: 19.12.2007
(51) Int. Cl.: B23B 31/26, B23Q 17/00

(54) **Maschinenspindel mit einer Spannvorrichtung**
Machine spindle mit clamping device
Broche de machine comprenant un dispositif de serrage

(30) Priorität: 12.02.2007 DE 102007007389
(43) Veröffentlichungstag der Anmeldung: 13.08.2008
(73) Patentinhaber: Ott-Jakob Spanntechnik GmbH, 87663 Lengenwang (DE)
(72) Erfinder: Mohr, Peter, 87487, Wiggenbach (DE); Bechteler, Wolfgang, 87640, Biessenhofen (DE); Gast, Stephan, 86987, Schwabsoien (DE); Greif, Josef, 87654, Friesenried (DE); Rösch, Conrad, 87459, Pfronten (DE)
(74) Vertreter: Charrier, Rapp & Liebau

(56) Entgegenhaltungen:
- EP-A- 1 166 932
- WO-A-20/05115686

## Beschreibung

Die Erfindung betrifft eine Maschinenspindel, insbesondere einer Werkzeugmaschine, mit einer Spannvorrichtung zum Spannen eines Werkzeugs oder Werkzeughalters nach dem Oberbegriff des Anspruchs 1.

Eine derartige Maschinenspindel ist aus der WO 2005/115686 A1 bekannt. Dort ist innerhalb der Maschinenspindel eine zwischen einer Spannstellung und einer Lösestellung axial verschiebbare und durch eine Spannfeder in Richtung der Spannstellung beaufschlagte Zugstange angeordnet. Die Zugstange weist an ihrem vorderen Ende einen Spannkonus mit mehreren an dessen Außenseite anliegenden Spannelementen auf, die durch die Axialbewegung des Spannkonus mit Hilfe der Zugstange zwischen einer Klemmstellung zum Festhalten eines Werkzeugs oder Werkzeughalters in der Maschinenspindel und einer Freigabestellung zur Freigabe des Werkzeugs oder Werkzeughalters bewegbar sind. Innerhalb der Maschinenspindel sind auch ein oder mehrere Sensoren zur Überwachung der Spannkräfte oder Spannzustände vorgesehen. Da sich die in der Maschinenspindel angeordneten Teile der Spannvorrichtung jedoch nicht nur drehen, sondern während des Spannvorgangs auch eine relativ große Hubbewegung durchführen, stellt die Übertragung der durch die Sensoren erfassten Messdaten zwischen den bewegten und stationären Teilen der Spannvorrichtung ein Problem dar.

Aufgabe der Erfindung ist, eine Maschinenspindel der eingangs genannten Art zu schaffen, die im gesamten Betriebsbereich der Spannvorrichtung eine einfache und sichere Übertragung der durch den Sensor erfassten Messdaten ermöglicht.

Diese Aufgabe wird durch eine Maschinenspindel mit den Merkmalen des Anspruchs 1 gelöst. Zweckmäßige Weiterbildungen und vorteilhafte Ausgestaltungen der Erfindung sind Gegenstand der Unteranspruche.

Bei der erfindungsgemäßen Maschinenspindel ist dem innerhalb der Maschinenspindel angeordneten Sensor bzw. den Sensoren eine Transponderanordnung mit einem ortsfesten Statorring und einem durch die Hubbewegung der Zugstange innerhalb des Statorrings axial verschiebbaren Rotorring zur drahtlosen Daten- und Energieübertragung zugeordnet. Dadurch können die von der Sensorik erfassten Messdaten und auch die für die Versorgung der Sensorik benötigte Energie auf besonders kompakte und Platz sparende Bauweise im gesamten Betriebsbereich der Spannvorrichtung zwischen den bewegten und den stationären Teilen der Spannvorrichtung berührungslos übertragen werden. So kann z.B. die Spannkraft während des gesamten Spannvorgangs und während der Bearbeitung überwacht werden. Besonders zwischen der Maschinenspindel und der innerhalb der Maschinenspindel axial verschiebbaren Zugstange sind keine Verbindungsleitungen für die Energie- und Signalübertragung erforderlich.

Die Breite des Statorrings ist vorzugsweise so gewählt, dass sich der Rotorring im gesamten Hubbereich der Zugstange vollständig innerhalb des Statorrings befindet. Dadurch wird im gesamten Hubbereich der Zugstange eine sichere Energie- und Signalübertragung gewährleistet.

Zur einfacheren Signalübermittlung zwischen Sensor und Rotorring sind diese zweckmäßigerweise derart angeordnet, dass zwischen ihnen keine Relativbewegung erfolgt. Dies kann z.B. dadurch erreicht werden, dass der Sensor und der Rotorring fest auf der Zugstange angeordnet sind.

In einer besonders kompakten Bauweise ist der Statorring in einem Gehäuseteil einer am hinteren Ende der Zugstange angeordneten Löseeinheit integriert. Der Statorring kann aber auch in einem separaten Gehäuse untergebracht sein.

Der Sensor ist zweckmäßigerweise als Druckring mit mehreren Dehnungsmessstreifen ausgeführt. Es können aber auch andere Sensoren zum Einsatz gelangen. Der Sensor ist in vorteilhafter Weise zwischen der Spannfeder und einem Ringabsatz der Zugstange angeordnet. Die Sensorik kann aber auch an anderen geeigneten Stellen innerhalb der Maschinenspindel untergebracht sein.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine Maschinenspindel einer Werkzeugmaschine mit einer erfindungsgemäßen Spannvorrichtung in einem Längsschnitt und
- **Figur 2**: einen vergrößerte Detailansicht des Bereichs X von Figur 1.

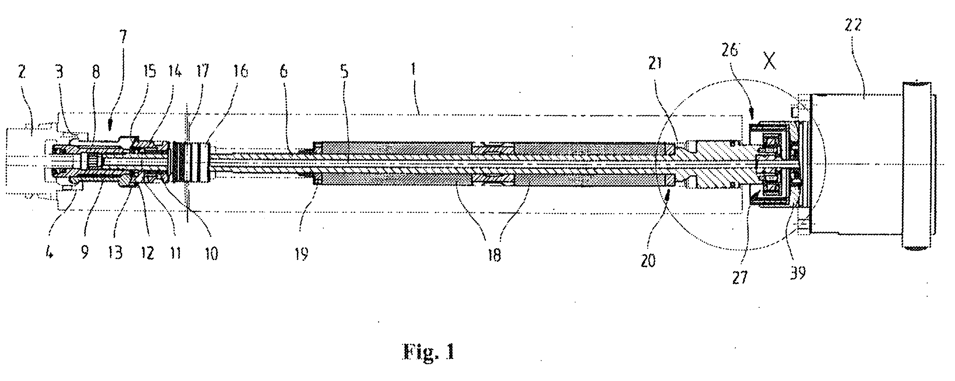

In Figur 1 ist eine gestrichelt dargestellte hohlzylindrische Maschinenspindel 1 einer Werkzeugmaschine mit einer integrierten Spannvorrichtung zum Spannen eines Werkzeugs oder Werkzeughalters 2 im Längsschnitt gezeigt. Die Maschinenspindel 1 weist an ihrem in Figur 1 linken vorderen Ende einen Innenkegel 3 auf, der zum Eingriff eines hier als Hohlschaftkegel ausgeführten Kegelschafts 4 des Werkzeugs oder Werkzeughalters 2 ausgebildet ist.

Die Spannvorrichtung enthält eine innerhalb der Maschinenspindel 1 zu deren Mittelachse 5 konzentrisch angeordnete und axial verschiebbare Zugstange 6 und einen Spannsatz 7, der an dem in Figur 1 linken vorderen Ende der Zugstange 6 angeordnet ist. Der Spannsatz 7 weist eine am vorderen Ende der Zugstange 6 befestigte Spannhülse bzw. einen Spannkonus 8 und mehrere an der Außenseite des Spannkonus 8 anliegende Spannelemente 9 in Form von Zangensegmenten auf, die sich parallel zur Mittelachse 5 der Maschinenspindel 1 erstrecken und durch Axialbewegung des Spannkonus 8 in einer zur Mittelachse 5 der Maschinenspindel 1 parallelen Lage zwischen einer radial inneren Freigabestellung und einer radial äußeren Klemmstellung verschoben werden.

Durch einen am hinteren Ende der Spannelemente 9 angeordneten Abstandshalter werden die Spannelemente 9 in Umfangsrichtung in einem vorbestimmten Abstand voneinander gehalten. Der Abstandshalter enthält eine axial verschiebbare und durch eine Feder 10 in Richtung der Spannelemente 9 beaufschlagte kronenförmige erste Führungsbuchse 11, die an ihrem den Spannelementen 9 zugewandten Ende mehrere in Umfangsrichtung gleich beabstandete, in Axialrichtung vorstehende Ansätze 12 mit abgeschrägten stirnseitigen Führungsflächen aufweist. Die Ansätze 12 der Führungsbuchse 11 greifen in eine Nut 13 an dem rückseitigen Ende der Spannelemente 9 ein und liegen mit ihrer abgeschrägten Stirnfläche an einer entsprechenden schrägen Gegenfläche im Grund der Nut 13 an. Der Abstandshalter enthält ferner eine feststehende zweite Führungsbuchse 14, die zu den Führungsflächen der ersten Führungsbuchse 11 entgegengesetzt geneigte vordere Führungsflächen 15 zur Anlage an entsprechenden Gegenflächen am hinteren Ende der Spannelemente 9 aufweist. Der Aufbau und die Funktionsweise des Spannsatzes ist in der DE 100 31 027 ausführlich erläutert. Auf diese Druckschrift wird ausdrücklich Bezug genommen.

Anschließend an den Spannsatz 7 ist über der Zugstange 6 eine Buchse 16 zur Übergabe eines durch die Zugstange 6 geleiteten Mediums an radiale Bohrungen 17 angeordnet. Über die Buchse 16 kann z.B. das durch die Zugstange zum Werkstück geleitete Kühlschmiermittel oder ein anderes Arbeitsfluid in vorbestimmten Stellungen der Zugstange 6 umgeleitet und über die radialen Bohrungen 17 abgeführt werden. Der Spannkonus 8 wird über die Zugstange 6 durch eine um diese konzentrisch angeordnete Spannfeder 18 nach hinten in die in Figur 1 gezeigte Spannstellung vorgespannt. Bei der gezeigten Ausführung ist die Spannfeder 18 als Gasdruckfeder ausgeführt. Die Spannfeder 18 kann aber auch als Tellerfederpaket oder dgl. ausgebildet sein. Die Spannfeder 18 ist an der einen Seite an einer innerhalb der Maschinenspindel 1 abgestützten Anlagescheibe 19 und an der anderen Seite über einen ringförmigen Sensor 20 an einem am hinteren Ende der Zugstange 6 befindlichen Ringabsatz 21 abgestützt. Über den Sensor 20 wird die Spannkraft der Spannvorrichtung überwacht, was im Folgenden noch näher erläutert wird. Die Zugstange 6 ist für die Zuführung eines Arbeitsfluids zum Werkzeug bzw. Werkzeughalter 2 hohl ausgeführt. An dem in Figur 1 rechten hinteren Ende der Zugstange 6 ist eine Löseeinheit 22 angeordnet, durch welche die Zugstange 6 entgegen der Kraft der Spannfeder 18 zum Lösen des Spannsatzes 7 nach vorne geschoben werden kann.

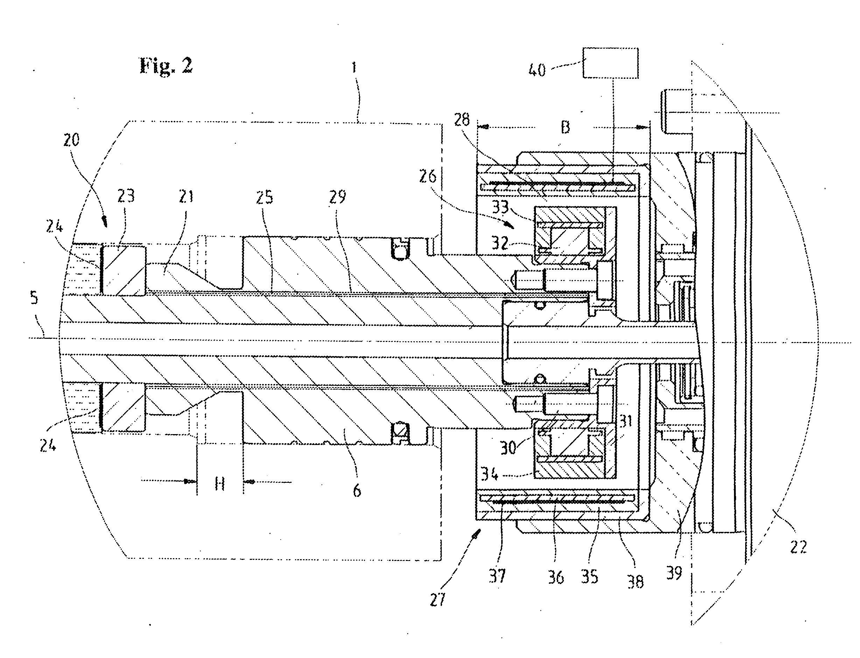

Wie aus Figur 2 hervorgeht, ist der Sensor 20 bei der gezeigten Ausführung als Druckring 23 mit mehreren stirnseitig aufgebrachten Dehnungsmessstreifen 24 ausgeführt. Die Dehnungsmessstreifen 24 sind über Leitungen 25 mit einem am hinteren Ende der Zugstange 6 befestigten Rotorring 26 verbunden, der innerhalb eines Statorrings 27 durch einen Ringspalt 28 beabstandet angeordnet ist und mit diesem eine Transponderanordnung zur drahtlosen Daten- und Energieübertragung zwischen den rotierenden und feststehenden Teilen der Spannvorrichtung bildet. Die Leitungen 25 sind knickfrei in parallel zur Mittelachse 5 der Maschinenspindel 1 verlaufenden Bohrungen 29 der Zugstange 6 untergebracht und sind daher auch ohne gesonderte Abdeckung geschützt.

Der Rotorring 26 umfasst einen über Schrauben 30 an dem hinteren Ende der Zugstange 6 befestigten Trägerring 31, auf dem eine Schaltungsanordnung 32 mit einem Sendemodul zur berührungslosen Übertragung der Messdaten an den Statorring 27 und eine Übertragungsspule 33 zur berührungslosen Energieübertragung von dem Statorring 27 für die Versorgung der Schaltungsanordnung 32 untergebracht sind. Die Schaltungsanordnung 32 kann außerdem eine Elektronik zum Aufbereitung und Weiterleitung der durch den Sensor 20 gelieferten Signale an das Sendemodul enthalten. Gegebenfalls kann in der Schaltungsanordnung 32 bereits eine Vorverarbeitung der durch den Sensor gelieferten Signale erfolgen. Das Sendemodul ist vorzugsweise als Funkmodul im Radiofrequenzbereich ausgeführt. Die Schaltungsanordnung 32 und die Übertragungsspule 33 sind auf dem Trägerring 31 angeordnet und zum Schutz von einer Vergussmasse 34 umgeben.

Der ortfeste Statorring 27 enthält ebenfalls einen Trägerring 38, der an seiner Innenseite eine Spule 36 für die berührungslose Energieübertragung an dem Rotorring 26 und ein Schaltungsanordnung 37 mit einem Empfangsmodul für die durch das Sendemodul übermittelten Signale innerhalb einer Vergussmasse 35 aufweist. Bei der gezeigten Ausführung ist der Statorring 27 in einem napfförmigen Gehäuseteil 39 der Löseeinheit untergebracht. Die Schaltungsanordnung 37 kann neben einem Empfangsmodul auch eine Auswerteelektronik zur Vorverarbeitung der empfangenen Daten enthalten und ist mit einer externen Versorgungs- und Steuereinheit 40 verbunden.

Die Breite B des Statorrings 27 ist gemäß Figur 2 so gewählt, dass sich der Rotorring 26 im gesamten Hubbereich H der Zugstange 6, d.h. bei der Verschiebung der Zugstange 6 zwischen der Spann- und Lösestellung, vollständig innerhalb des Statorrings 27 befindet. Dadurch wird im gesamten Hubbereich der Zugstange 6 eine sichere Energie- und Signalübertragung gewährleistet.

### Die vorstehend beschriebene Spannvorrichtung funktioniert wie folgt:

Bei der in Figur 1 gezeigten Spannstellung wird der Spannkonus 8 über die Zugstange 6 und die Spannfeder 18 in die Maschinenspindel 1 eingezogen. In dieser Stellung werden die Spannelemente 9 radial nach außen gedrückt, wobei das Werkzeug oder der Werkzeughalter 2 in der Maschinenspindel 1 gehalten wird.

Zum Lösen der Spannvorrichtung wird der Spannkonus 8 mit Hilfe der Zugstange 6 durch die z.B. hydraulisch oder elektrisch betätigte Löseeinheit 22 aus der in Figur 1 gezeigten Spannstellung in Richtung des Werkzeugs oder Werkzeughalters 2 verschoben. Durch die Vorwärtsbewegung des Spannkonus 8 in Richtung des Werkzeugs oder Werkzeughalters 2 werden die an der Außenseite des Spannkonus 8 anliegenden Spannelemente 9 parallel nach innen verschoben und geben das Werkzeug oder den Werkzeughalter 2 frei.

Über den Sensor 20 wird der Spanndruck der Spannfeder 18 überwacht. Die durch den Sensor 20 erfassten Daten werden von dem Rotorring 27 an den Statorring 26 berührungslos übertragen und können von dort an eine Auswerte- und Steuereinheit 40 übermittelt werden. Dort können die Signale weiterverarbeitet und an eine Maschinensteuerung oder dgl. weitergeleitet werden. Die Auswerte- und Steuereinheit 40 kann auch eine Anzeigeeinrichtung zur Darstellung der Spannkraft oder der Spannzustände aufweisen.

Die erfindungsgemäße Spannvorrichtung ist nicht auf das vorstehend beschriebene Ausführungsbeispiel beschränkt. So kann der Sensor 20 auch an anderen geeigneten Stellen innerhalb der Maschinenspindel oder auch direkt in den Spannelementen integriert sein. Die Spannkraftüberwachung kann außerdem auch bei Steilkegelspannsystemen zum Einsatz gelangen.

## Patentansprüche

1. Maschinenspindel (1), insbesondere einer Werkzeugmaschine, mit einer Spannvorrichtung zum Spannen eines Werkzeugs oder Werkzeughalters (2), wobei die Spannvorrichtung eine zwischen einer Spannstellung und einer Lösestellung axial verschiebbare Zugstange (6), eine Spannfeder (18) zur Beaufschlagung der Zugstange (6) in Richtung der Spannstellung, mindestens einen innerhalb der Maschinenspindel (1) angeordneten Sensor (20) zur Überwachung der Spannkraft und einen am vorderen Ende der Zugstange (6) angeordneten Spannkonus (8) mit mehreren an dessen Außenseite anliegenden Spannelementen (9) enthält, die durch die Axialbewegung des Spannkonus (8) mit Hilfe der Zugstange (6) zwischen einer Klemmstellung zum Festhalten des Werkzeugs oder Werkzeughalters (2) und einer Freigabestellung zur Freigabe des Werkzeugs oder Werkzeughalters (2) bewegbar sind, **dadurch gekennzeichnet, dass** dem Sensor (20) eine Transponderanordnung (26, 27) mit einem ortsfesten Statorring (27) und einem durch die Hubbewegung der Zugstange (6) innerhalb des Statorrings (27) axial verschiebbaren Rotorring (26) zur drahtlosen Daten- und Energieübertragung zugeordnet ist.

2. Maschinenspindel nach Anspruch 1, **dadurch gekennzeichnet, dass** die Breite B des Statorrings (27) so gewählt ist, das sich der Rotorring (26) im gesamten Hubbereich Z der Zugstange (6) vollständig innerhalb des Statorrings (26) befindet.

3. Maschinenspindel nach Anspruch 1 oder 2, **dadurch gekennzeichnet, dass** der Sensor (20) und der Rotorring (26) derart angeordnet sind, dass zwischen diesen keine Relativbewegung erfolgt.

4. Maschinenspindel nach einem der Ansprüche 1 bis 3, **dadurch gekennzeichnet, dass** der Statorring (27) in einem Gehäuseteil (39) einer am hinteren Ende der Zugstange (6) angeordneten Löseeinheit (22) untergebracht ist.

5. Maschinenspindel nach einem der Ansprüche 1 bis 4, **dadurch gekennzeichnet, dass** der Rotorring (26) eine Übertragungsspule (33) zur berührungslosen Energieübertragung von dem Statorring (27) und eine Schaltungsanordnung (32) mit einem Sendemodul zur berührungslosen Übertragung der Messdaten enthält.

6. Maschinenspindel nach Anspruch 5, **dadurch gekennzeichnet, dass** die Übertragungsspule (33) und die Schaltungsanordnung (32) auf einem am hinteren Ende der Zugstange (6) befestigten Trägerring (31) angeordnet und von einer Vergussmasse (34) umgeben sind.

7. Maschinenspindel nach einem der Ansprüche 1 bis 6, **dadurch gekennzeichnet, dass** der Statorring (27) eine Spule (36) zur berührungslosen Energieübertragung an den Rotorring (26) und eine Schaltungsanordnung (37) mit einem Empfangsmodul zum Empfang der berührungslos übertragenen Messdaten enthält.

8. Maschinenspindel nach Anspruch 7, **dadurch gekennzeichnet, dass** die Spule (36) und die Schaltungsanordnung (37) auf einem ortsfesten Trägerring (38) angeordnet und von einer Vergussmasse (35) umgeben sind.

9. Maschinenspindel nach einem der Ansprüche 1 bis 8, **dadurch gekennzeichnet, dass** der Sensor (20) als Druckring (23) mit mehreren Dehnungsmessstreifen (24) ausgebildet ist.

10. Maschinenspindel nach einem der Ansprüche 1 bis 9, **dadurch gekennzeichnet, dass** der Sensor (20) zwischen der Spannfeder (18) und einem Ringabsatz (21) der Zugstange (6) angeordnet ist.

## Claims

1. Machine spindle (1), in particular of a machine tool, with a clamping device for clamping a tool or tool holder (2), wherein the clamping device comprises a draw rod (6) which is displaceable axially between a clamping position and a releasing position, a clamping spring (18) for acting on the draw rod (6) in the direction of the clamping position, at least one sensor (20) for monitoring the clamping force and which is arranged inside the machine spindle (1), and a clamping cone (8) which is arranged at the front end of the draw rod (6) and has a plurality of clamping elements (9) which bear on its outside and are moveable through the axial movement of the clamping cone (8) with the aid of the draw rod (6) between a clamping position for holding the tool or tool holder (2) securely and a releasing position for releasing the tool or tool holder (2), **characterised in that** the sensor (20) has an associated transponder arrangement (26, 27) with a stationary stator ring (27) and a rotor ring (26) which is displaceable axially through the stroking movement of the draw rod (6) inside the stator ring (27) for wireless transmission of data and power.

2. Machine spindle according to claim 1, **characterised in that** the breadth B of the stator ring (27) is chosen so that the rotor ring (26) is completely inside the stator ring (26) throughout the entire stroking range (Z) of the draw rod (6).

3. Machine spindle according to claim 1 or 2, **characterised in that** the sensor (20) and the rotor ring (26) are arranged such that no relative movement takes place between these.

4. Machine spindle according to one of claims 1 to 3, **characterised in that** the stator ring (27) is accommodated in a housing part (39) of a releasing unit (22) arranged at the rear end of the draw rod (6).

5. Machine spindle according to one of claims 1 to 4, **characterised in that** the rotor ring (26) comprises a transmission coil (33) for contactless transmission of power from the stator ring (27) and a circuit arrangement (32) with a transmitting module for contactless transmission of the measurement data.

6. Machine spindle according to claim 5, **characterised in that** the transmission coil (33) and the circuit arrangement (32) are arranged on a carrier ring (31) fixed at the rear end of the draw rod (6), and surrounded by a casting compound (34).

7. Machine spindle according to one of claims 1 to 6, **characterised in that** the stator ring (27) comprises a coil (36) for contactless transmission of power to the rotor ring (26) and a circuit arrangement (37) with a receiving module for reception of the contactlessly transmitted measurement data.

8. Machine spindle according to claim 7, **characterised in that** the coil (36) and the circuit arrangement (37) are arranged on a stationary carrier ring (38) and surrounded by a casting compound (35).

9. Machine spindle according to one of claims 1 to 8, **characterised in that** the sensor (20) is embodied as a thrust ring (23) with a plurality of wire strain gauges (24).

10. Machine spindle according to one of claims 1 to 9, **characterised in that** the sensor (20) is arranged between the clamping spring (18) and an annular shoulder (21) of the draw rod (6).

## Revendications

1. Broche de machine (1), en particulier d'une machine-outil avec un dispositif de serrage pour le serrage d'un outil ou d'un porte-outil (2), dans laquelle le dispositif de serrage contient une barre de traction (6) mobile axialement entre une position de serrage et une position de desserrage, un ressort de précontrainte (18) pour la sollicitation de la barre de traction (6) en direction de la position de serrage, au moins un capteur (20) disposé dans la broche de machine (1) pour la surveillance de la force de serrage et un cône de serrage (8) disposé au niveau de l'extrémité avant de la barre de traction (6) avec plusieurs éléments de serrage (9) reposant sur son côté extérieur, qui sont mobiles par le mouvement axial du cône de serrage (8) à l'aide de la barre de traction (6) entre une position de serrage pour maintenir bloqué l'outil ou le porte-outil (2) et une position de libération pour libérer l'outil ou le porte-outil (2), **caractérisée en ce qu'**au capteur (20) est associé un ensemble de transpondeur (26, 27) avec une couronne de stator (27) fixe et une couronne de rotor (26) mobile axialement grâce au mouvement de levage de la barre de traction (6) dans la couronne de stator (27) pour la transmission sans fil de données et d'énergie.

2. Broche de machine selon la revendication 1, **caractérisée en ce que** la largeur B de la couronne de stator (27) est choisie de sorte que la couronne de rotor (26) se trouve complètement dans la zone de levage entière Z de la barre de traction (6) dans la couronne de stator (26).

3. Broche de machine selon la revendication 1 ou 2, **caractérisée en ce que** le capteur (20) et la couronne de rotor (26) sont disposés de sorte qu'aucun mouvement relatif n'ait lieu entre ceux-ci.

4. Broche de machine selon l'une quelconque des revendications 1 à 3, **caractérisée en ce que** la couronne de stator (27) est logée dans un élément de boîtier (39) d'une unité de desserrage (22) disposée au niveau de l'extrémité arrière de la barre de traction (6).

5. Broche de machine selon l'une quelconque des revendications 1 à 4, **caractérisée en ce que** la couronne de rotor (26) contient une bobine de transmission (33) pour la transmission sans contact d'énergie de la couronne de stator (27) et un montage (32) avec un module d'émission pour la transmission sans contact des données de mesure.

6. Broche de machine selon la revendication 5, **caractérisée en ce que** la bobine de transmission (33) et le montage (32) sont disposés sur une bague porteuse (31) fixée au niveau de l'extrémité arrière de la barre de traction (6) et sont entourés par une masse de remplissage (34).

7. Broche de machine selon l'une quelconque des revendications 1 à 6, **caractérisée en ce que** la couronne de stator (27) contient une bobine (36) pour la transmission sans contact d'énergie à la couronne de rotor (26) et un montage (37) avec un module de réception pour la réception des données de mesure transmises sans contact.

8. Broche de machine selon la revendication 7, **caractérisée en ce que** la bobine (36) et le montage (37) sont disposés sur une bague porteuse (38) fixe et sont entourés par une masse de remplissage (35).

9. Broche de machine selon l'une quelconque des revendications 1 à 8, **caractérisée en ce que** le capteur (20) est réalisé comme un anneau de pression.

10. Broche de machine selon l'une quelconque des revendications 1 à 9, **caractérisée en ce que** le capteur (20) est disposé entre le ressort de précontrainte (18) et un décrochement annulaire (21) de la barre de traction (6).
